# EUROPÄISCHE PATENTSCHRIFT

(11) **EP 2 406 092 B1**
(45) Veröffentlichungstag und Bekanntmachung des Hinweises auf die Patenterteilung: **05.06.2013**
(21) Anmeldenummer: 10706481.8
(22) Anmeldetag: 21.01.2010
(51) Int. Cl.: B60J 7/05

(54) **DECKELELEMENTTRÄGER MIT STEUERGLEITER**
SUNROOF SUPPORT WITH CONTROL SLIDING SHOES
SUPPORT D'ÉLÉMENT DE TOIT AVEC PATINS DE COMMANDE

(30) Priorität: 13.03.2009 DE 102009013105
(43) Veröffentlichungstag der Anmeldung: 18.01.2012
(73) Patentinhaber: Webasto AG, 82131 Stockdorf (DE)
(72) Erfinder: FÄRBER, Manfred, 82407 Wielenbach (DE)
(74) Vertreter: advotec.
(86) Internationale Anmeldenummer: PCT/DE2010/000063
(87) Internationale Veröffentlichungsnummer: WO 2010/102598

(56) Entgegenhaltungen:
- DE-A1- 3 417 098
- DE-A1- 3 442 600
- DE-A1-102006 060 369

## Beschreibung

Die Erfindung betrifft ein Fahrzeugdach mit mindestens einem eine Dachöffnung wahlweise verschließenden oder zumindest teilweise freigebenden Deckelelement nach dem Oberbegriff des Patentanspruchs 1.

Ein derartiges Fahrzeugdach ist aus der Druckschrift DE 10 2006 060 369 A 1 bekannt und umfasst ein Deckelelement, das entlang seiner bezogen auf eine Fahrzeuglängsmittelebene seitlichen Ränder jeweils ein Trägerelement aufweist, das einen Schwenk- bzw. Ausstellarm für das Deckelelement darstellt. Entlang der seitlichen Ränder der Dachöffnung, die mittels des Deckelelements verschließbar ist, sind in dachfester Weise Führungsschienen angeordnet, in denen beim Betätigen des Deckelelements jeweils eines der Trägerelemente verschiebbar geführt ist. In den Führungsschienen ist des Weiteren jeweils ein Antriebsschlitten angeordnet, der zum Verschwenken des Deckelelements mit einer Führungsbahn zusammenwirkt, die an dem jeweils zugeordneten Trägerelement des Deckelelements angeordnet ist. Der Verlauf der Führungsbahn definiert eine Schwenkbewegung des Deckelelements beim Verfahren der Antriebsschlitten in den Führungsschienen, und zwar derart, dass das Deckelelement zwischen einer Schließstellung, in der die Dachöffnung komplett geschlossen ist, einer Lüfterstellung, in der ein heckseitiger Rand des Deckelelements gegenüber einem heckseitigen, festen Dachabschnitt ausgestellt ist, und einer abgesenkten Verschiebestellung verschwenkt werden kann, in welcher das Deckelelement zur Freigabe der Dachöffnung in Fahrzeuglängsrichtung unter den heckseitigen, festen Dachabschnitt verfahren werden kann. Während des Schwenkvorgangs wird das Deckelelement mittels so genannter Steuergleiter gegen ein

Verfahren in Fahrzeuglängsrichtung gesichert. Die Steuergleiter sind an den Trägerelementen des Deckelelements angeordnet und wirken mit korrespondierenden Ausnehmungen an einer oberen Begrenzungswand der jeweiligen Führungsschiene zusammen. Beim Verschwenken des Deckelelements in die abgesenkte Verschiebestellung tauchen die Steuergleiter in einen Führungskanal der jeweiligen Führungsschiene ein.

Bei dem vorstehend beschriebenen Fahrzeugdach besteht das Problem, dass das Deckelelement beim Verschwenken zwischen der Schließstellung und der abgesenkten Verschiebestellung einen ruckartigen Versatz erfährt. Der Grund hierfür besteht darin, dass die Trägerelemente des Deckelelements am fahrzeugbugseitigen Ende der Führungsschienen jeweils auf einen festen Anschlag auffahren, der ein Umschalten von der Verschiebebewegung in eine Schwenkbewegung einleitet, so dass die Trägerelemente des Deckelelements durch den heckseitig steilen Verlauf der mit den Antriebsschlitten zusammenwirkenden Führungsbahnen der Trägerelemente nach oben bewegt werden. Die Steuergleiter, die während des Verschiebens in den Führungsschienen geführt sind, tauchen hierbei in korrespondierende Steuerausnehmungen an den Führungsschienen ein und sichern dadurch das Deckelelement gegen ein Verfahren in Fahrzeuglängsrichtung. Bei der Absenkbewegung fällt das Deckelelement den heckseitig steilen Verlauf der mit den Antriebsschlitten zusammenwirkenden Führungsbahnen der Trägerelemente schnell nach unten, wobei die Steuergleiter frei in die jeweilige Führungsbahn der betreffenden Führungsschiene eintauchen, bis sie an einer unteren Führungsfläche derselben anschlagen.

Ferner ist es aus der Praxis bekannt, ein Schiebedachdeckelelement hinsichtlich seiner Schwenkbewegung durch einen zusätzlichen Steuerhebel zu steuern, der mit einem entsprechenden Steuerelement in der betreffenden Führungsschiene zusammenwirkt. Diese Lösung ist aber mit einer Vielzahl an Bauteilen und damit auch mit hohen Kosten verbunden.

Der Erfindung liegt die Aufgabe zugrunde, ein Fahrzeugdach der einleitend genannten Gattung zu schaffen, das sich durch eine harmonische Absenkbewegung des Deckelelements bei gleichzeitig geringer Teilezahl für eine Deckel-elementkinematik auszeichnet.

Diese Aufgabe ist erfindungsgemäß durch das Fahrzeugdach mit den Merkmalen des Patentanspruchs 1 gelöst.

Der Kern der Erfindung besteht mithin darin, für den heckseitigen Steuergleiter in Form der Rampe eine Dämpfung bereitzustellen, welche die Eintauch- bzw. Ausfahrgeschwindigkeit des Steuergleiters in den bzw. aus dem Führungskanal der betreffenden Führungsschiene in Fahrzeughochrichtung verlangsamt. Damit kann mit einem geringen Bauteilaufwand ein harmonischer Bewegungsablauf beim Absenken des Deckelelements in seine Verschiebestellung bzw. beim Zurückschwenken in seine Schließstellung erreicht werden. Beim Verfahren des Deckelelements aus seiner die Dachöffnung freigebenden Stellung in die Schließstellung dient die Rampe als Anschlag für das Deckelelement, auf den der betreffende Steuergleiter auffährt, so dass durch das Zusammenwirken des Antriebsschlittens und der Führungsbahn des Trägerelements das Deckelelement aus seiner Verschiebestellung nach oben in seine Schließstellung verschwenkt werden kann. Ein weiterer, gegebenenfalls im bugseitigen Endbereich der Führungsschienen angeordneter Anschlag für das Deckelelement ist damit entbehrlich. Damit entfällt auch eine präzise Abstimmung zwischen einem vorderen Anschlag und einem an der Führungsschiene ausgebildeten Gegenlager für den Steuergleiter, welches durch Zusammenwirken mit dem Steuergleiter ein Verschieben des Deckelelements während dessen Schwenkbewegung verhindert.

Bei einer besonders kostengünstig realisierbaren Ausfiihrungsform des Fahrzeugdachs nach der Erfindung sind die Rampen für die heckseitigen Steuergleiter jeweils von einer Ausklinkung der jeweiligen Führungsschiene gebildet. Zusätzliche, die Rampen bildende Bauteile sind damit nicht erforderlich. Alternativ kann die Rampe auch von einem Einsatz der jeweiligen Führungsschiene gebildet sein, er beispielsweise als Kunststoffspritzgießteil ausgebildet ist.

Ein besonders harmonischer Bewegungsablauf beim Verschwenken des Deckelelements kann erreicht werden, wenn die Rampen jeweils einen in Fahrzeughochrichtung bogenförmigen Verlauf haben.

Um ein präzises Einfahren der heckseitigen Steuergleiter in eine oberseitige, das Gegenlager bildende Riegelausnehmung der jeweiligen Führungsschiene zu gewährleisten, fluchtet ein fahrzeugbugseitiger Rand der Rampen jeweils zumindest annährend mit einem bugseitigen Rand der oberseitigen Riegelausnehmung der jeweiligen Führungsschiene.

Eine zweckmäßige Ausführungsform des Fahrzeugdachs nach der Erfindung umfasst neben den heckseitigen Steuergleitern auch bugseitige Steuergleiter, die bevorzugt ebenfalls an den Trägerelementen angeordnet sind, die jeweils mit einer korrespondierenden Riegelausnehmung der betreffenden Führungsschiene zusammenwirken und die beim Verfahren des Deckelelements jeweils ebenfalls in einem Führungskanal der betreffenden Führungsschiene geführt sind. Um einen möglichst großen Verfahrweg des Deckelelements erreichen zu können, liegt zwischen dem fahrzeugbugseitigen Rand der Rampe und einer oberen Wand der jeweiligen Führungsschiene ein Zwischenraum, dessen Abmessungen in Fahrzeughochrichtung größer als die oder gleich den Abmessungen des bugseitigen Steuergleiters in Fahrzeughochrichtung sind. Der bugseitige Steuergleiter kann damit an der betreffenden Rampe vorbei in Fahrzeugheckrichtung verfahren werden.

Um eine harmonische Übergabe zwischen der Rampe und der Riegelausnehmung für den heckseitigen Steuergleiter zu gewährleisten, hat der heckseitige Steuergleiter bei einer zweckmäßigen Ausführungsform des Fahrzeugdachs nach der Erfindung eine Bauhöhe, die größer ist als der Zwischenraum zwischen der oberen Wand der Führungsschiene und dem fahrzeugbugseitigen Rand der Rampe.

Insbesondere erweist sich eine im Sinne der Erfindung ausgebildete Rampe für einen heckseitigen Steuergleiter als vorteilhaft, wenn die Führungsbahn des Trägerelements in ihrem heckseitigen Endbereich einen Mitnehmerabschnitt aufweist, der eine größere Steigung als der bugseitig von dem Endbereich angeordnete Bereich der betreffenden Führungsbahn aufweist.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:

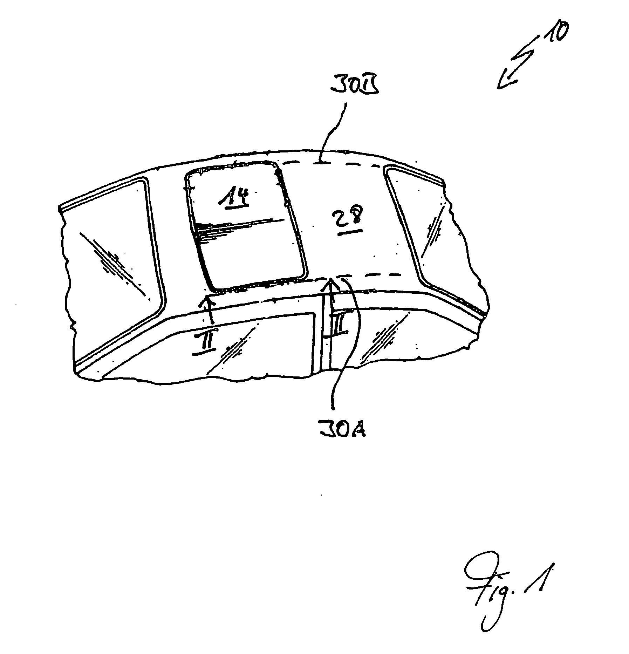

- Fig. 1: eine perspektivische Draufsicht auf ein Fahrzeugdach nach der Erfindung mit einem Dachöffnungssystem;
- Fig. 2: einen schematischen Längsschnitt durch das Dachöffnungssystem im Bereich von dessen Antriebsmechanik entlang der Linie II-II in Fig. 1 in Schließstellung eines Deckelelements;
- Fig. 3: eine Fig. 2 entsprechende Ansicht, jedoch in Lüfterstellung des Deckelelements;
- Fig. 4: eine Fig. 2 entsprechende Ansicht, jedoch in einer abgesenkten Verschiebestellung des Deckelelements;
- Fig. 5: eine vergrößerte Ansicht eines heckseitigen Abschnitts des Deckelelements in Verbindung mit einer Führungsschiene im geringfügig heckwärts verfahrenen Zustand des Deckelelements;
- Fig. 6: eine Fig. 5 entsprechende Ansicht, jedoch beim Auffahren eines Steuergleiters auf eine Anfahrrampe;
- Fig. 7: ebenfalls eine Fig. 5 entsprechende Ansicht, jedoch beim Einfahren des Steuergleiters in eine Riegelausnehmung;
- Fig. 8: ebenfalls eine im Wesentlichen Fig. 5 entsprechende Ansicht, jedoch kurz vor Erreichen der Schließstellung des Deckelelements;
- Fig. 9: eine vergrößerte Ansicht eines bugseitigen Abschnitts des Deckelelements in Verbindung mit der Führungsschiene in der in Fig. 8 dargestellten Stellung des Deckelelements;
- Fig. 10: ebenfalls eine Fig. 5 entsprechende Ansicht, jedoch nach Erreichen der Schließstellung des Deckelelements;
- Fig. 11: eine Fig. 9 entsprechende Ansicht, jedoch in der Schließstellung des Deckelelements;
- Fig. 12: eine ebenfalls Fig. 5 entsprechende Ansicht, jedoch in Lüfterstellung des Deckelelements; und
- Fig. 13: den bugseitigen Abschnitt des Deckelelements in der Lüfterstellung.

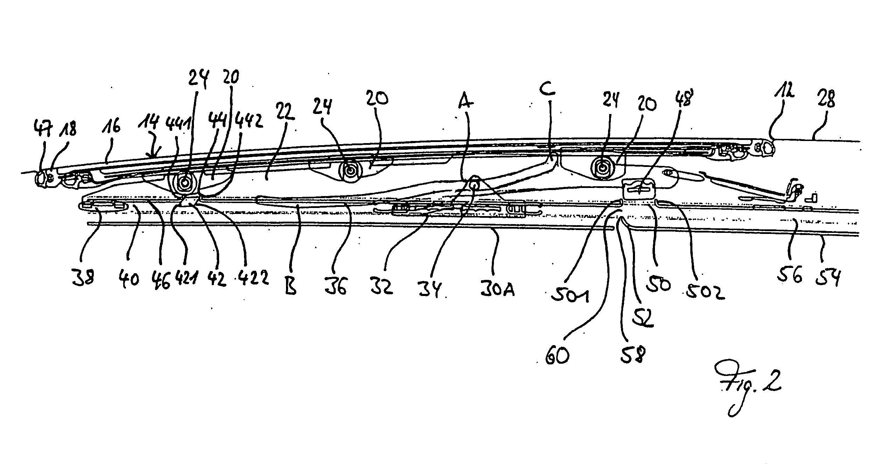

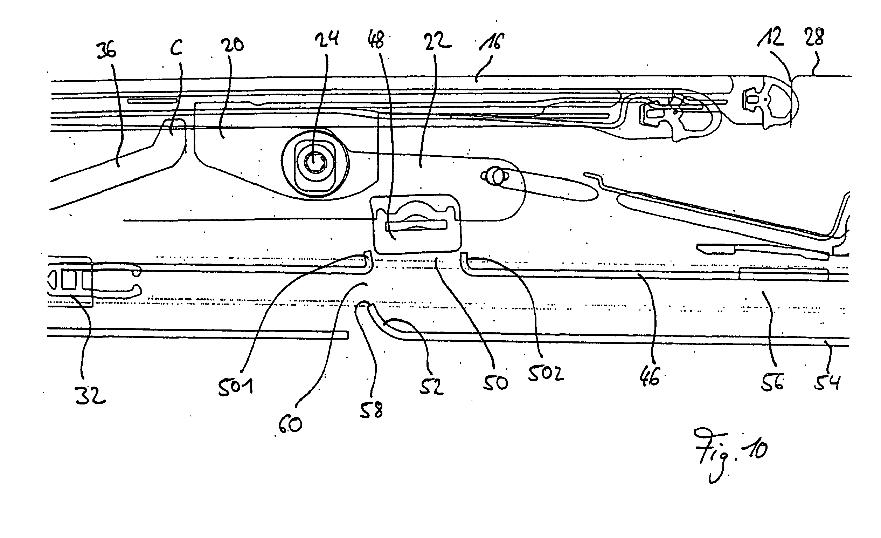

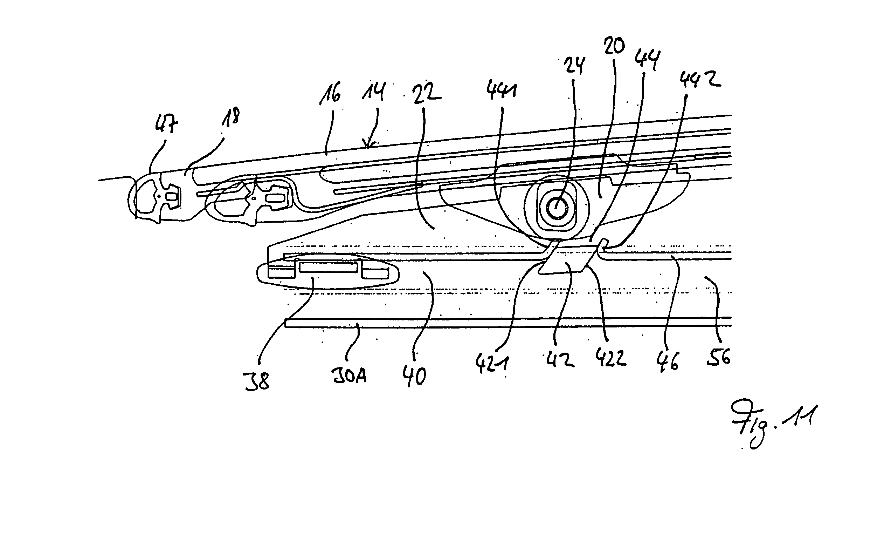

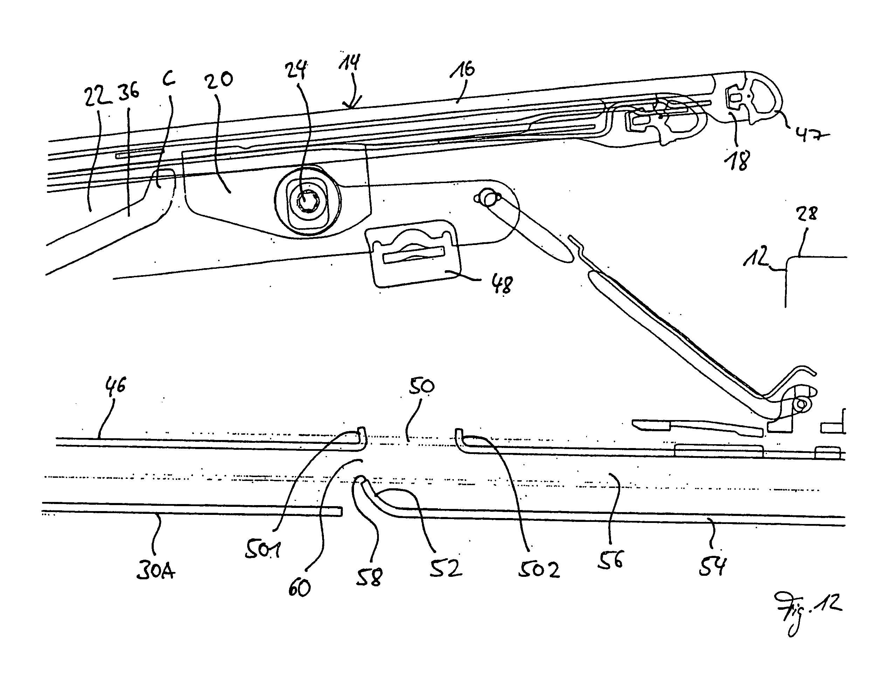

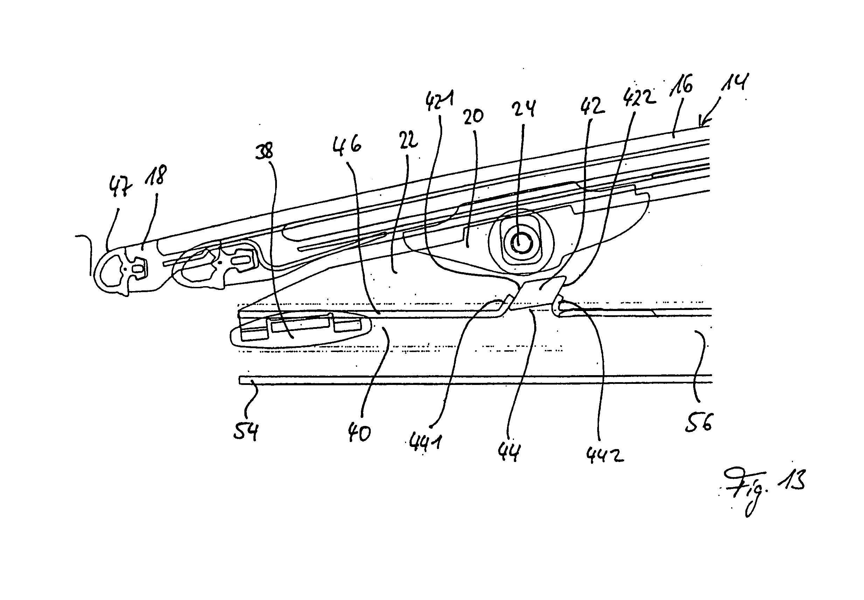

In der Zeichnung ist ein Fahrzeugdach 10 eines Personenkraftwagens dargestellt, das mit einer Dachöffnung 12 versehen ist, die mittels eines Deckelelements 14 wahlweise verschlossen oder zumindest teilweise freigegeben werden kann. Das Deckelelement 14 ist Bestandteil eines anhand der Figuren 2 bis 13 detailliert dargestellten Dachöffnungssystems und umfasst einen Glaskörper 16, der mit einem aus Polyurethanschaum gebildeten Rahmen 18 versehen ist, in welchem ein Deckelinnenblech eingebettet ist. Das Deckelinnenblech weist Befestigungslaschen 20 auf, die gegenüber der Ebene des Glaskörpers 16 rechtwinkelig nach unten abstehen und zur Anbindung des Deckelelements 14 an beidseits einer Fahrzeuglängsmittelebene an seitlichen Rändern des Deckelelements 14 angeordnete Deckelelementträger 22 dienen, die Bestandteil einer Verstelleinrichtung für das Deckelelement 14 sind. Die Befestigungslaschen 20 sind jeweils über eine Schraube 24 mit dem jeweiligen Deckelelementträger 22 verschraubt.

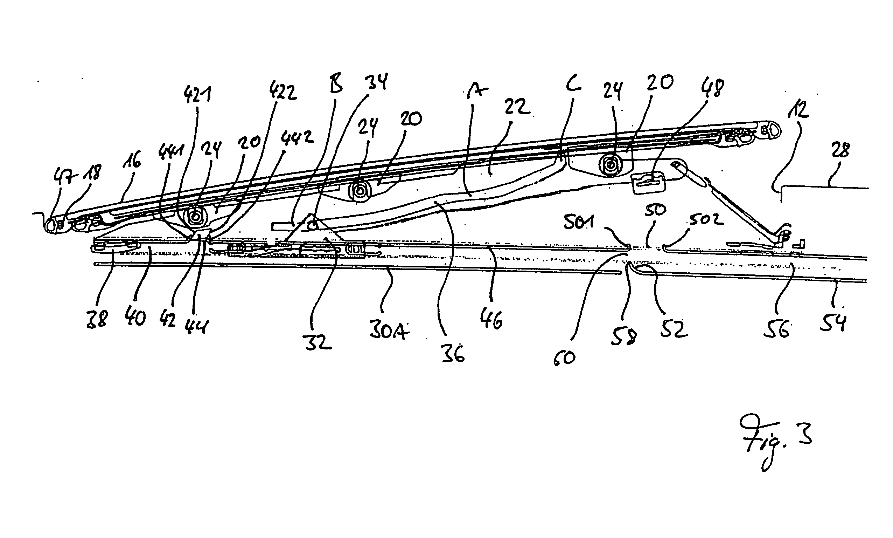

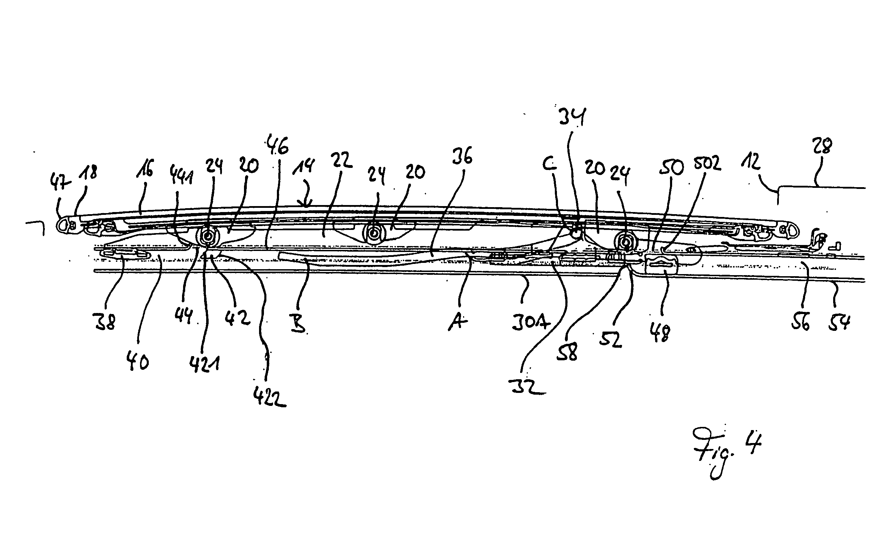

Die Verstelleinrichtung für das Deckelelement 14 dient dazu, das Deckelelement 14 zwischen einer in Fig. 2 dargestellten Schließstellung, in der die Dachöffnung 12 geschlossen ist, einer in Fig. 3 dargestellten Lüfterstellung, in welcher ein heckseitiger Rand 26 des Deckelelements 14 gegenüber einem heckseitigen festen Dachabschnitt 28 nach oben ausgestellt ist, und einer in Fig. 4 dargestellten, abgesenkten Verschiebestellung zu verschwenken, in welcher das Deckelelement 14 entlang von Führungsschienen 30A und 30B, die sich entlang der seitlichen Ränder der Dachöffnung 12 erstrecken, unter den heckseitigen festen Dachabschnitt 28 verfahren werden kann.

Die nachfolgende Beschreibung erfolgt allein anhand des in Vorwärtsfahrtrichtung links angeordneten Verstelleinrichtungsbereichs, der der Führungsschiene 30A zugeordnet ist. Der in Vorwärtsfahrtrichtung rechts angeordnete Verstelleinrichtungsbereich, der der Führungsschiene 30B zugeordnet ist, ist korrespondierend zu diesem spiegelsymmetrisch bezüglich der Fahrzeuglängsmittelebene ausgebildet.

Wie der Zeichnung zu entnehmen ist, umfasst die Verstelleinrichtung einen Antriebsschlitten 32, der in der Führungsschiene 30A in Fahrzeuglängsrichtung verschiebbar geführt ist und mittels eines hier nicht näher dargestellten drucksteifen Antriebskabels angetrieben ist. Der Antriebsschlitten 30 umfasst einen Führungszapfen 34, der sich in Fahrzeugquerrichtung erstreckt und eine als Kulisse ausgebildete Führungsbahn 36 durchgreift, die an dem Deckelelementträger 22 ausgebildet ist und deren Verlauf in Fahrzeuglängsrichtung einen durch Verfahren des Antriebsschlittens 32 in Fahrzeuglängsrichtung ausgelösten Schwenkvorgang des Deckelelements 14 definiert. Insbesondere weist die Führungsbahn 36 des Deckelelementträgers 22 einen Bereich A auf, der der in Fig. 2 dargestellten Schließstellung des Deckelelements 14 zugeordnet ist und in welchem der Führungszapfen 34 in dieser Schließstellung liegt. Des Weiteren weist die Führungsbahn 36 einen bugseitigen Bereich B auf, der der in Fig. 3 dargestellten Lüfterstellung zugeordnet ist und in dem der Führungszapfen 34 in dieser Lüfterstellung angeordnet ist. Ein heckseitiger Führungsbahnendbereich C ist der abgesenkten, in Fig. 4 dargestellten Verschiebestellung des Deckelelements 14 zugeordnet. In dieser abgesenkten Verschiebestellung dient der heckseitige Endbereich C als Mitnehmerabschnitt für den Führungszapfen 34 des Antriebsschlittens 32. Dieser Mitnehmerabschnitt stellt einen nach oben weisenden Knick der Führungsbahn 34 dar und hat mithin eine größere Steigung als die bugseitig des Endbereichs C angeordneten Bereiche der Führungsbahn 34.

Am bugseitigen Ende des Trägerelements 22 ist ein Gleiter 38 angeordnet, der in einem Führungskanal 40 der Führungsschiene 30A geführt ist und eine Schwenkachse des Deckelelements 14 definiert. Heckseitig von dem Gleiter 38 ist an dem Deckelelementträger 22 des Weiteren ein bugseitiger bzw. vorderer Steuergleiter 42 angeordnet, der in Fahrzeugquerrichtung vorsteht und in einem Schnitt in Fahrzeuglängsrichtung die Grundform eines Parallelogramms hat und das Deckelelement 14 in der in Fig. 2 dargestellten Schließstellung und der in der in Fig. 3 dargestellten Lüfterstellung gegen ein ungewolltes Verschieben in Fahrzeuglängsrichtung sichert. Hierzu wirkt der bugseitige Steuergleiter 42 über eine bugseitige Stirnfläche 421 und eine heckseitige Stirnfläche 422 mit einer Riegelausnehmung 44 an der oberen Wand 46 der Führungsschiene 30A zusammen. Die Riegelausnehmung 44 ist bugseitig von einer Führungswand 441 und heckseitig von einer Führungswand 442 begrenzt. Die Führungswände 441 und 442 sind jeweils in Richtung Fahrzeugheck geneigt, so dass das Deckelelement 16 bei einem Verfahren des Steuergleiters 42 in der kulissenartig ausgebildeten Riegelausnehmung 44 einen Versatz in Fahrzeuglängsrichtung erfährt, und zwar beim Verschwenken des Deckelelements 14 aus der Schließstellung in die Lüfterstellung in Fahrzeugheckrichtung, so dass der vordere Rand des Deckelelements 14 gegenüber dem vorderen Rand der Dachöffnung 12 beabstandet ist und eine am vorderen Rand des Deckelelements 14 angeordnete Dichtung 47 nicht gequetscht und beschädigt werden kann.

In einem heckseitigen Bereich des Deckelelementträgers 22 ist ein heckseitiger bzw. hinterer Steuergleiter 48 angeordnet, der ebenfalls in Fahrzeugquerrichtung vorsteht und mit einer heckseitigen Riegelausnehmung 50 zusammenwirkt, die ebenfalls an der oberen Wand 46 der Führungsschiene 30A ausgebildet ist und durch eine bugseitige Führungswand 501 und durch eine heckseitige Führungswand 502 begrenzt ist, die Einlaufstege für den Steuergleiter 48 bilden und diesen beim Durchfahren der Riegelausnehmung 50 führen. Unterhalb des vorderen Randes der Riegelausnehmung 50 ist eine Rampe 52 ausgebildet, die eine Ausklinkung einer unteren Begrenzungswand 54 der Führungsschiene 30A darstellt und über die der Steuergleiter 48 beim Verschwenken des Deckelelements 14 in die abgesenkte Verschiebestellung in einen Führungskanal 56 der Führungsschiene 30A gleitend und gedämpft eintaucht. Die Rampe 52 hat in Fahrzeughochrichtung einen bogenförmigen Verlauf und einen bugseitigen Rand 58, der zumindest annähernd mit der bugseitigen Führungswand 501 der Riegelausnehmung 50 fluchtet. Des Weiteren bildet der bugseitige Rand 58 der Rampe 52 mit der oberen Wand 46 der Führungsschiene 30A einen Zwischenraum 60, der im Wesentlichen den Abmessungen des vorderen Steuergleiters 42 in Fahrzeughochrichtung entspricht, so dass dieser beim Verfahren des Deckelelements 16 unter den heckseitigen festen Dachabschnitt 28 an der Rampe 52 vorbei fahren kann. Die Bauhöhe des Steuergleiters 48 ist größer als der Zwischenraum 60, so dass eine harmonische Übergabe des Steuergleiters 48 von der Rampe 52 in die Riegelausnehmung 50 und umgekehrt erfolgen kann.

Bei der vorliegend beschriebenen Ausführungsform ist die Führungsbahn 36 als Führungskulisse des Deckelelementträgers 22 ausgebildet. Alternativ ist es aber auch denkbar, dass an einem Deckelelementträger eine Stegruhrung ausgebildet ist, die von einem Klauenabschnitt eines Antriebsschlittens umgriffen ist und die Führungsbahn bildet, die mit dem Führungselement des Antriebsschlittens zusammenwirkt.

Das in der Zeichnung dargestellte Dachöffnungssystem arbeitet in nachfolgend beschriebener Weise.

Ausgehend von der in Fig. 2 dargestellten Schließstellung des Deckelelements 14, in welcher der Führungszapfen 34 des Antriebsschlittens 32 in dem Bereich A der Führungskulisse 36 angeordnet ist, wird der Antriebsschlitten 32 beim Verschwenken des Deckelelements 14 in seine in Fig. 3 dargestellte Lüfterstellung in Richtung Fahrzeugbug in einen Bereich B der Führungskulisse 36 verfahren, der gegenüber dem Bereich A in Richtung Fahrzeugbug abfällt, so dass durch das Zusammenwirken des Führungszapfens 34 mit der Führungskulisse 36 der heckseitige Rand 26 des Deckelelements 14 gegenüber dem festen Dachabschnitt 26 nach oben ausgestellt wird. Gleichzeitig wird der Steuergleiter 42 in der Riegelausnehmung 44 nach oben verfahren, so dass durch die Neigung der Führungswände 441 und 442 das Deckelelement 14 einen geringfügigen Versatz in Richtung Fahrzeugheck erfährt und zum Schutz der Dichtung 47 ein Spalt zwischen dem vorderen Rand des Deckelelements 14 und dem vorderen Rand der Dachöffnung 12 gebildet wird.

Soll das Deckelelement 14 zur Freigabe der Dachöffnung 12 unter den heckseitigen, festen Dachabschnitt 28 verfahren werden, wird der Antriebsschlitten 32 ebenfalls ausgehend von der in Fig. 2 dargestellten Schließstellung in Richtung Fahrzeugheck in den Bereich C der Führungskulisse 36 verfahren. Dadurch wird das Deckelelement 14 um die von dem Gleiter 38 definierte Schwenkachse in die abgesenkte Verschiebestellung verschwenkt, so dass der Steuergleiter 48 durch die Riegelausnehmung 50 in den Führungskanal 56 der Führungsschiene 30A eintaucht. Hierbei fährt der Steuergleiter 48 auf die in die Führungsschiene 30A integrierte Rampe bzw. Anlauframpe 52 auf, so dass der Deckelelementträger 22 auch beim Einfahren des Führungszapfens 34 in den steil angestellten Bereich C der Kulisse 36 nicht frei in den Führungskanal 56 fällt, sondern durch das Gleiten des Steuergleiters 48 auf der bogenförmigen Rampe 52 eine Dämpfung erfährt. Damit gestaltet sich der Schwenkvorgang in die abgesenkte Verschiebestellung harmonisch. Auch der bugseitige Steuergleiter 42 ist dann in dem Führungskanal 56 der Führungsschiene 30A angeordnet. Nun kann das Deckelelement 14 durch Verfahren des Antriebsschlittens 32 in Richtung Fahrzeugheck nach hinten unter den heckseitigen festen Dachabschnitt 28 verfahren werden, wobei der bugseitige Steuergleiter 42 aufgrund seiner geringeren Bauhöhe oberhalb der Rampe 42 an dieser vorbei gefahren werden kann.

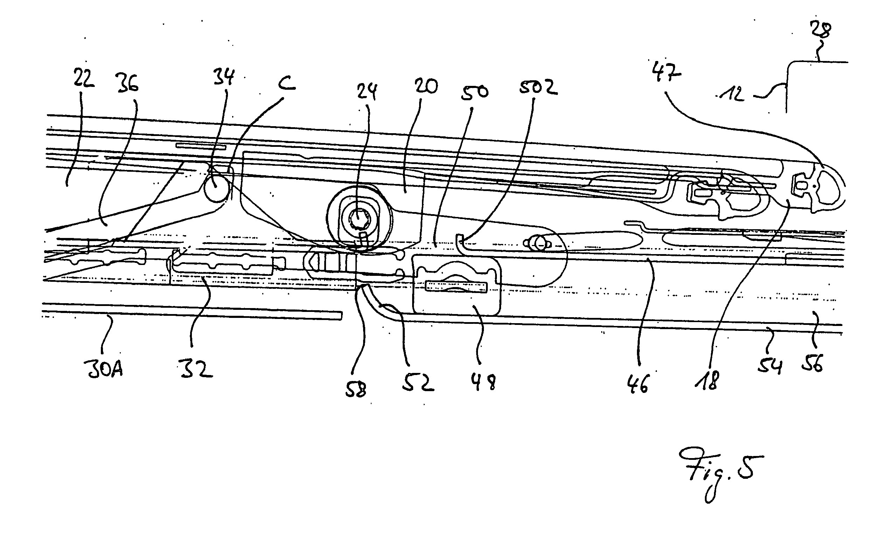

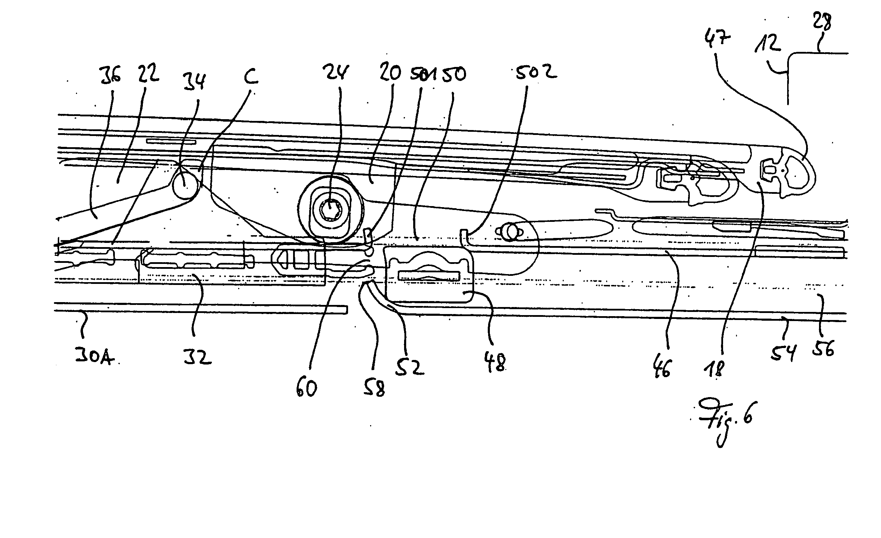

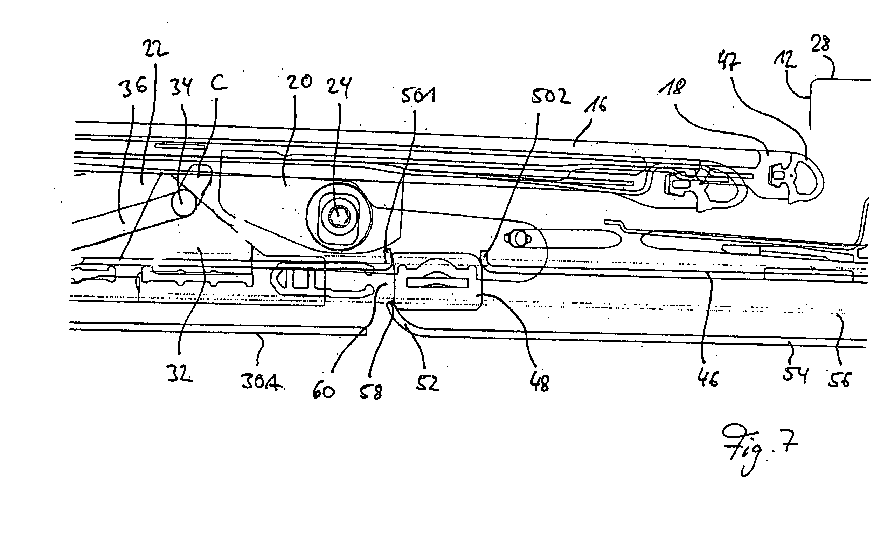

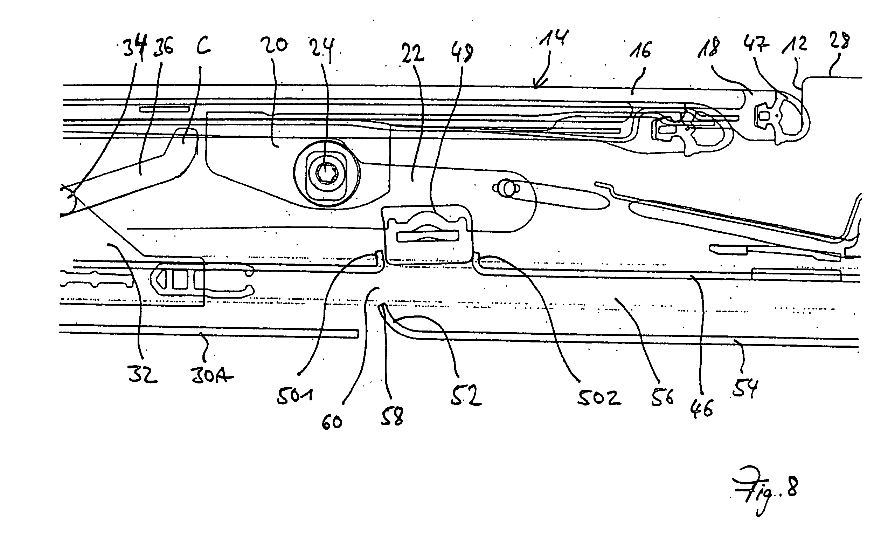

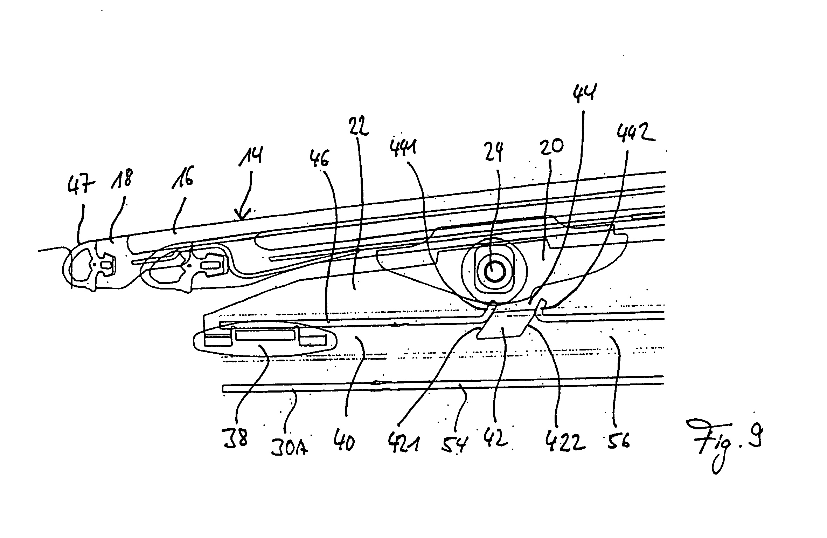

Beim Schließen der Dachöffnung 12 wird das Deckelelement 14 soweit in Richtung Fahrzeugbug verfahren, bis der Steuergleiter 48 auf die Rampe 52 auffährt, die einteilig an der die untere Lauffläche für den Steuergleiter 48 bildenden, unteren Begrenzungswand 54 der Führungsschiene 30A ausgebildet ist (vgl. Figuren 5 und 6). Diese dient somit als Anschlag, der die Schwenkbewegung des Deckelelements 14 nach oben in seine Schließstellung steuert und ein "weiches" Einfahren in die Schwenkbewegung ermöglicht. In Fig. 7 ist die Übergabe des Steuergleiters 48 von der Rampe 52 an die Riegelausnehmung 50 dargestellt, die tolerantgünstig angeordnet ist. Der Schwenkvorgang selbst wird wiederum durch das Verfahren des Führungszapfens 34 des Antriebsschlittens 32 in der Führungskulisse 36 in Richtung Fahrzeugbug ausgelöst. In der Schließstellung des Deckelelements 14 ist der Steuergleiter 48 oberhalb und außerhalb der Riegelausnehmung 50 angeordnet. Wenn der Steuergleiter 48 beim Verschwenken nach oben aus der Riegelausnehmung 50 ausfährt und außer Funktion gesetzt wird, findet eine Übergabe der Verriegelung des Deckelelements 14 in Fahrzeuglängsrichtung an den vorderen Steuergleiter 42 statt, der dann innerhalb der vorderen Riegelausnehmung 44 angeordnet ist (vgl. Figuren 8 und 9). Ein ungewolltes Verschieben des Deckelelements 14 wird dann durch den vorderen Steuergleiter 42 verhindert, der in der Riegelausnehmung 44 angeordnet ist. Durch die direkte Steuerung mit der den Anschlag bildenden Rampe 52 und der Übergabe des eine Steuernocke bildenden Steuergleiters 48 von der unteren Lauffläche bzw. Begrenzungswand 54 der Führungsschiene 30A an den oberen Bereich der Führungsschiene 30A mit den Einlauf stegen 501 und 502 können die Toleranzen niedrig gehalten werden.

### Bezugszeichenliste

| | |
|---|---|
| 10 | Fahrzeugdach |
| 12 | Dachöffnung |
| 14 | Deckelelement |
| 16 | Glaskörper |
| 18 | Rahmen |
| 20 | Befestigungslaschen |
| 22 | Deckelelementträger |
| 24 | Schraube |
| 26 | Rand |
| 28 | fester Dachabschnitt |
| 30A,B | Führungsschiene |
| 32 | Antriebsschlitten |
| 34 | Führungszapfen |
| 36 | Führungsbahn |
| 38 | Gleiter |
| 40 | Führungskanal |
| 42 | bugseitiger Steuergleiter |
| 421 | Stirnfläche |
| 422 | Stirnfläche |
| 44 | Riegelausnehmung |
| 441 | Führungswand |
| 442 | Führungswand |
| 46 | obere Wand |
| 47 | Dichtung |
| 48 | heckseitiger Steuergleiter |
| 50 | Riegelausnehmung |
| 501 | Führungswand |
| 502 | Führungswand |
| 52 | Rampe |
| 54 | Begrenzungswand |
| 56 | Führungskanal |
| 58 | Rand |
| 60 | Zwischenraum |

## Patentansprüche

1. Fahrzeugdach mit mindestens einem eine Dachöffnung(12) wahlweise verschließenden oder zumindest teilweise freigebenden Deckelelement (14), das zwischen einer Schließstellung und einer abgesenkten Verschiebestellung verstellbar ist und bezogen auf eine Fahrzeuglängsmittelebene beidseits jeweils ein Trägerelemen (22) aufweist, das eine Führungsbahn (36) umfasst, die zum Verschwenken des Deckelelements (14) mit mindestens einem Führungselement (34) eines Antriebsschlittens (32) zusammenwirkt, der in einer dachfesten Führungsschiene (30A, 30B) geführt ist, wobei an dem Trägerelement (22) zumindest ein heckseitiger Steuergleiter (48) angeordnet ist, der beim Verfahren des Deckelelements (14) in einem Führungskanal (56) der jeweiligen Führungsschiene (30A,30B) geführt ist und das Deckelelement (14) gegen ein Verschwenken sichert, **dadurch gekennzeichnet, dass** der heckseitige Steuergleiter (48) beim Verschwenken des Deckelelements (14) in die abgesenkte Verschiebestellung über eine Rampe (52) in den betreffenden Führungskanal (56) der bereffenden Führungsschiene (30A,30B) eintaucht.

2. Fahrzeugdach nach Anspruch 1, **dadurch gekennzeichnet, dass** die Rampen (52) für die heckseitigen Steuergleiter (48) jeweils von einer Ausklinkung der jeweiligen Führungsschiene (30A, 30B) gebildet sind.

3. Fahrzeugdach nach Anspruch 1 oder 2, **dadurch gekennzeichnet, dass** die Rampen (52) jeweils einen in Fahrzeughochrichtung bogenförmigen Verlauf haben.

4. Fahrzeugdach nach einem der Ansprüche 1 bis 3, **dadurch gekennzeichnet, dass** ein fahrzeugbugseitiger Rand (58) der Rampen (52) zumindest annähernd mit einem bugseitigen Rand einer oberseitigen Riegelausnehmung (50) der jeweiligen Führungsschiene (30A, 30B) fluchtet.

5. Fahrzeugdach nach Anspruch 4, **dadurch gekennzeichnet, dass** zwischen dem fahrzeugbugseitigen Rand (58) der Rampen (52) und einer oberen Wand (46) der jeweiligen Führungsschiene (30A,30B) ein Zwischenraum (60) angeordnet ist, der größer als die oder gleich den Abmessungen eines bugseitigen Steuergleiters (42) in Fahrzeughochrichtung ist.

6. Fahrzeugdach nach Anspruch 5, **dadurch gekennzeichnet, dass** der heckseitige Steuergleiter (48) eine Bauhöhe hat, die größer ist als der Zwischenraum (60) zwischen der oberen Wand (46) der Führungsschiene (30A,30B) und dem fahrzeugbugseitigen Rand (58) der Rampe (52).

7. Fahrzeugdach nach einem der Ansprüche 1 bis 6, **dadurch gekennzeichnet, dass** die Führungsbahn (36) des Trägerelements (22) in ihrem heckseitigen Endbereich (C) einen Mitnehmerabschnitt aufweist, der eine größere Steigung als die bugseitig von dem Endbereich (C) angeordneten Bereiche der Führungsbahn (36) aufweist.

## Claims

1. Vehicle roof with at least one cover element (14) which optionally closes or at least partially opens up a roof opening (12), is displaceable between a closed position and a lowered displacement position and has a respective carrier element (22) on both sides with respect to a longitudinal center plane of the vehicle, the carrier element comprising a guide track (36) which, for the pivoting of the cover element (14), interacts with at least one guide element (34) of a driving carriage (32) which is guided in a guide rail (30A, 30B) which is fixed to the roof, wherein at least one rear control slide (48) is arranged on the carrier element (22), said control slide, during movement of the cover element (14), being guided in a guide channel (56) of the respective guide rail (30A, 30B) and securing the cover element (14) against pivoting, **characterized in that**, during pivoting of the cover element (14) into the lowered displacement position, the rear control slide (48) enters the relevant guide channel (56) of the relevant guide rail (30A, 30B) via a ramp (52).

2. Vehicle roof according to Claim 1, **characterized in that** the ramps (52) for the rear control slides (48) are each formed by a notch in the respective guide rail (30A, 30B).

3. Vehicle roof according to Claim 1 or 2, **characterized in that** the ramps (52) each have a curved profile in the vertical direction of the vehicle.

4. Vehicle roof according to one of Claims 1 to 3, **characterized in that** a front edge (58) of the ramps (52) is at least approximately aligned with a front edge of an upper locking recess (50) of the respective guide rail (30A, 30B).

5. Vehicle roof according to Claim 4, **characterized in that** an intermediate space (60) which is larger than or equal to the dimensions of a front control slide (42) in the vertical direction of the vehicle is arranged between the front edge (58) of the ramps (52) and an upper wall (56) of the respective guide rail (30A, 30B).

6. Vehicle roof according to Claim 5, **characterized in that** the rear control slide (48) has an overall height which is larger than the intermediate space (60) between the upper wall (46) of the guide rail (30A, 30B) and the vehicle front edge (58) of the ramp (52).

7. Vehicle roof according to one of Claims 1 to 6, **characterized in that** the rear end region (C) of the guide track (36) of the carrier element (22) has a carry-along section which has a greater slope than those regions of the guide track (36) which are arranged at the front of the end region (C).

## Revendications

1. Toit de véhicule comprenant au moins un élément de recouvrement (14) fermant ou ouvrant au moins partiellement de manière sélective une ouverture de toit (12), qui peut être déplacé entre une position de fermeture et une position de coulissement renfoncée et qui présente, par rapport à un plan médian longitudinal du véhicule, de chaque côté, un élément de support respectif (22), qui comprend une piste de guidage (36) qui, pour faire pivoter l'élément de recouvrement (14), coopère avec au moins un élément de guidage (34) d'un chariot d'entraînement (32), qui est guidé dans un rail de guidage fixé au toit (30A, 30B), au moins un coulisseau de commande arrière (48) étant disposé sur l'élément de support (22), lequel, lors du déplacement de l'élément de recouvrement (14), est guidé dans un canal de guidage (56) du rail de guidage respectif (30A, 30B) et empêche l'élément de recouvrement (14) de pivoter, **caractérisé en ce que** le coulisseau de commande arrière (48), lors du pivotement de l'élément de recouvrement (14) dans la position de coulissement renfoncée, plonge par le biais d'une rampe (52) dans le canal de guidage concerné (56) du rail de guidage concerné (30A, 30B).

2. Toit de véhicule selon la revendication 1, **caractérisé en ce que** les rampes (52) pour le coulisseau de commande arrière (48) sont chacune formées par une encoche du rail de guidage respectif (30A, 30B).

3. Toit de véhicule selon la revendication 1 ou 2, **caractérisé en ce que** les rampes (52) ont chacune une allure courbée dans la direction verticale du véhicule.

4. Toit de véhicule selon l'une quelconque des revendications 1 à 3, **caractérisé en ce qu'**un bord (58) des rampes (52) du côté avant du véhicule est au moins approximativement aligné avec un bord du côté avant d'un évidement de verrouillage du côté supérieur (50) du rail de guidage respectif (30A, 30B).

5. Toit de véhicule selon la revendication 4, **caractérisé en ce qu'**entre le bord (58) des rampes (52) du côté avant du véhicule et une paroi supérieure (46) du rail de guidage respectif (30A, 30B) est disposé un espace intermédiaire (60) qui est supérieur ou égal aux dimensions d'un coulisseau de commande du côté avant (42) dans la direction verticale du véhicule.

6. Toit de véhicule selon la revendication 5, **caractérisé en ce que** le coulisseau de commande arrière (48) présente une hauteur structurelle qui est supérieure à l'espace intermédiaire (60) entre la paroi supérieure (46) du rail de guidage (30A, 30B) et le bord (58) de la rampe (52) du côté avant du véhicule.

7. Toit de véhicule selon l'une quelconque des revendications 1 à 6, **caractérisé en ce que** la piste de guidage (36) de l'élément de support (22) présente dans sa région d'extrémité arrière (C) une portion d'entraînement qui présente une plus grande pente que les régions de la piste de guidage (36) disposées du côté avant par rapport à la région d'extrémité (C).
